# EUROPÄISCHE PATENTSCHRIFT

(11) **EP 3 627 658 B1**
(45) Veröffentlichungstag und Bekanntmachung des Hinweises auf die Patenterteilung: **21.04.2021**
(21) Anmeldenummer: 19178369.5
(22) Anmeldetag: 05.06.2019
(51) Int. Cl.: H02J 3/14, H02J 13/00, H05B 45/10, H05B 47/18, F21S 8/00, F21V 23/06, H05B 47/105, H05B 47/11, F21V 23/04

(54) **VERFAHREN ZUM BETREIBEN EINES ELEKTRISCHEN VERBRAUCHERMODULS SOWIE ELEKTRISCHES VERBRAUCHERSYSTEM**
METHOD FOR OPERATING AN ELECTRIC CONSUMPTION MODULE AND ELECTRIC CONSUMPTION SYSTEM
PROCÉDÉ DE FONCTIONNEMENT D'UN MODULE DE CONSOMMATEUR ÉLECTRIQUE AINSI QUE SYSTÈME DE CONSOMMATEUR ÉLECTRIQUE

(30) Priorität: 19.09.2018 DE 102018122956
(43) Veröffentlichungstag der Anmeldung: 25.03.2020
(73) Patentinhaber: Insta GmbH, 58509 Lüdenscheid (DE)
(72) Erfinder: Grosch, Volker, 45549 Sprockhövel (DE); Melnik, Andrew, 44225 Dortmund (DE)

(56) Entgegenhaltungen:
- WO-A1-2012/176097
- WO-A1-2018/091310
- AT-B1- 511 371
- DE-A1- 10 140 308
- US-A1- 2015 022 091
- US-A1- 2015 264 759

## Beschreibung

Die Erfindung betrifft ein Verfahren zum Betreiben eines wenigstens einen elektrischen Verbraucher und eine Ansteuereinheit zum Ansteuern des wenigstens einen elektrischen Verbrauchers aufweisenden Verbrauchermoduls durch ein Steuermodul mit den Merkmalen des Anspruchs 1. Ferner betrifft die Erfindung ein elektrisches Verbrauchersystem gemäß Anspruch 9, das zum Ausführen dieses Verfahrens eingerichtet ist.

Bei elektrischen/elektronischen Steuersystemen von Gebäudeinstallationseinrichtungen werden mehrere oder auch eine Vielzahl elektrischer Verbrauchermodule, die auch als Aktoren angesprochen werden können, in einer Modulkette in Reihe zusammengeschaltet. Von dem Steuermodul erhalten die elektrischen Verbraucher ihre Strom- bzw. Spannungsversorgung. Zudem ist eine zusätzliche Datenleitung vorgesehen, über die ein Datenstrom zum Ansteuern des zumindest einen elektrischen Verbrauchers jedes Verbrauchermoduls übertragbar ist. Ein solches Steuersystem ist beispielsweise in der EP 1 530 108 B1 der Anmelderin beschrieben. Dieser Stand der Technik befasst sich mit dem Datenstrom, und zwar wie dieser zum Ansteuern unterschiedlicher elektrischer Verbrauchermodule auszulegen ist und wie jedes elektrische Verbrauchermodul diesen zum Weitersenden an das in der Verbrauchermodulkette nachgeschaltete Verbrauchermodul ändert.

Dieses vorbekannte Verfahren und das ebenfalls offenbarte Steuersystem dient zum zentralen Ansteuern der einzelnen, durchaus mit unterschiedlichen elektrischen Verbrauchern in die Verbrauchermodulkette zusammengeschalteten elektrischen Verbraucher. Zum Bedienen des oder der elektrischen Verbraucher eines elektrischen Verbrauchermoduls einer solcher Verbrauchermodulkette sind Sensoren, typischerweise manuell betätigbare Sensoren wie Schalter, Dimmer oder dergleichen im Gebäude installiert Durch diese wird das Steuermodul und über das Steuermodul sodann der durch die Sensorbetätigung zu bedienende, gewünschte elektrische Verbraucher angesteuert.

Eine direkte Bedienung des oder der elektrischen Verbraucher eines elektrischen Verbrauchermoduls ist bei diesem vorbekannten Konzept nicht vorgesehen. Gleichwohl wäre es wünschenswert, wenn zur Erhöhung des Bedienkomforts das ein oder andere Verbrauchermodul oder alle Verbrauchermodule auch direkt angesteuert werden können.

US 2015/0022091 A1 offenbart ein Leuchtensystem, welches durch zwei unterschiedliche Ansteuerungen angesteuert werden kann: Durch eine allgemeine, sowie eine leuchtenspezifische Ansteuerung. Wird das Leuchtensystem durch die leuchtenspezifische Ansteuerung angesteuert, kann eine Kontrolle der Leuchte über die allgemeine Steuerung nur durch ein spezielles Überschreib-Signal wiedererlangt werden.

WO 2012/176097 A1 offenbart ein System, bei dem mittels einer Benutzerschnittstelle an der Leuchte aus einer Vielzahl an Dimmverfahren ausgewählt wird, durch welches eine Leuchte angesteuert werden soll.

WO 2018/091310 A1 offenbart ein Verfahren, bei dem unterschiedliche Ansteuersignale priorisiert werden. Durch einen Benutzer ausgeführte Schaltbetätigungen werden als Ansteuersignal höher priorisiert, als Informationen von Helligkeitssensoren oder Zeitschaltuhren.

Der Erfindung liegt die Aufgabe zu Grunde, ein solches Verfahren und ein solches Verbrauchersystem vorzuschlagen, mit dem nicht nur eine Vorortsteuerung möglich ist, wobei diese auf einfache Art und Weise zurückgeschaltet werden kann, sondern mit dem auch Verbraucher unterschiedlichster Art angesteuert werden können.

Gelöst wird diese Aufgabe erfindungsgemäß durch ein Verfahren mit den Merkmalen des Anspruchs 1.

Die auf das elektrische Verbrauchersystem gerichtete Aufgabe wird durch ein elektrisches Verbrauchersystem mit den Merkmalen des Anspruchs 9 gelöst.

Bei diesem Verfahren - gleiches gilt für das elektrische Verbrauchersystem - ist zumindest ein elektrisches Verbrauchermodul mit einer Vorortsensorik ausgerüstet. Bei einer solchen Vorortsensorik handelt es sich um eine am Verbrauchermodul befindlichen Sensorik, mit der der zumindest eine elektrische Verbraucher dieses Verbrauchermoduls angesteuert werden kann. Bei einer Leuchte als beispielhaftem, elektrischem Verbraucher eines solchen Verbrauchermoduls kann es sich beispielsweise bei der Vorortsensorik um eine Sensorik zum Ein- und Ausschalten und/oder zum Einrichten der Helligkeit der Leuchte handeln. Ist die Vorortsensorik aktiviert, erfolgt ein Ansteuern der Leuchte, beispielsweise ein Dimmen mittels der Vorortsensorik. Aktiviert werden kann eine solche Vorortsensorik beispielsweise durch eine schlichte Betätigung derselben. Durch eine Betätigung der Vorortsensorik wird die Ansteuereinheit des Verbrauchermoduls in einen anderen Betriebszustand geschaltet, und zwar in denjenigen, dass die Signale der Vorortsensorik zum Ansteuern des oder der elektrischen Verbraucher ausgewertet werden. Dieses Umschalten kann durch ein vorbestimmtes Datenbit im Datenstrom der Vorortsensorik erfolgen. Ist die Vorortsensorik aktiviert, ist die Ansteuerung des zumindest einen elektrischen Verbrauchers des Verbrauchermoduls, also beispielsweise der Leuchte, von der aktuell anliegenden, von dem Steuermodul stammenden Ansteuerparametrierung entkoppelt. Mithin wird bei aktivierter Vorortsensorik die eingangsseitig an der Ansteuereinheit des elektrischen Verbrauchermoduls anliegende Ansteuerparametrierung nicht zum Ansteuern des zumindest eines elektrischen Verbrauchers genutzt. Eine Leuchte kann durch eine solche Vorortsensorik sodann unmittelbar an der Leuchte selbst gedimmt und/oder ein- und ausgeschaltet werden, und zwar ohne dass ein Nutzer zu diesem Zweck sich erst zu einem unter Umständen in einiger Entfernung zu der Leuchte befindlichen Schalter oder Dimmer bewegen muss. Zweckmäßig ist eine solche Konzipierung von elektrischen Verbrauchermodulen, wenn es sich bei einem solchen beispielsweise um eine Nachttischleuchte handelt und diese nicht nur vor Ort, sondern auch durch einen Raumschalter, beispielsweise wandseitig montiert, bedient werden kann. Mit einem solchen, beispielsweise als Dimmer ausgelegten Raumschalter kann der zumindest eine elektrische Verbraucher des Verbrauchermoduls ein- und ausgeschaltet und auch gedimmt werden. Mit der Vorortsensorik kann diese Leuchte allerdings auch vor Ort und somit etwa vom Bett aus bedient werden.

Zurückgeschaltet werden kann die Ansteuerung einer solchen Leuchte durch eine solche Vorortsensorik entweder durch entsprechende Betätigung der Vorortsensorik, das heißt: durch die Vorortsensorik wird die verbrauchermodulseitige Ansteuereinheit wieder in ihren anderen Betriebszustand geschaltet. Ein solches Umschalten kann auch durch Betätigen des Raumschalters, etwa eines wandseitig installierten Dimmers erfolgen. In einem solchen Fall ist gemäß einem Ausführungsbeispiel zwischen dem Dimmer und dem Verbrauchermodul ein Wandler angeordnet, der in einem Datenstrom Stellgrößen zur Ansteuerung der Ansteuereinheit in dem Verbrauchermodul bereitstellt. In diesem Fall integriert der eine Dimmstellungsänderung feststellende Wandler in seinem Datenstrom ein dezidiertes Bit, durch den die Auswerteeinheit im elektrischen Verbrauchermodul den Vorortsensorik- Betriebsmodus der Ansteuereinheit wieder in den anderen Betriebszustand geschaltet wird. Dieses kann beispielsweise durch Betätigen des wandseitig installierten Dimmers vorgenommen werden, was von dem Wandler detektiert diesen veranlasst, das vorgenannte Umschalt-Bit in den Datenstrom zu integrieren. Um eine tatsächlich nicht beabsichtigte Umschaltung des Betriebsmodus des elektrischen Verbrauchermoduls bezüglich seiner Ansteuerung herbeizuführen, ist in einem Ausführungsbeispiel vorgesehen, dass der vorstehend beispielsweise beschriebene Dimmer zum Deaktivieren der Vorortsensorikansteuerung gemäß einer Ausgestaltung des Verfahrens soweit betätigt werden muss, dass die bereitgestellte Ansteuerparametrierung die zuletzt von dem Steuermodul bereitgestellte um eine vorgegebene Größe unter- oder überschreitet. Dadurch wird sichergestellt, dass eine Beendigung der Vorortsensorikansteuerung nur dann erfolgt, wenn tatsächlich eine Bedienung mit dem beispielsweise wandseitig montierten Sensor erfolgen soll, was sich wiederum in einer Betätigung desselben über einen gewissen Stellwertbereich bemerkbar macht. Bei einer solchen Ausgestaltung erfolgt die Auswertung im Wandler. Dieses kann beispielsweise durch Vergleichen des aktuellen Dimmwertes mit einem zuvor gespeicherten erfolgen, wobei das Umschalt-Bit im Datenstrom gesendet wird, wenn die Abweichung größer ist als ein vorgegebener Stellwert. In einer Weiterbildung eines solchen Deaktivierungskonzeptes ist vorgesehen, dass, um sprunghafte Änderungen am elektrischen Verbraucher zu vermeiden, eine Änderung in der Ansteuerparametrierung des zumindest einen elektrischen Verbrauchers erst vorgenommen wird, wenn das am Eingang der Ansteuereinheit des Verbrauchermoduls anliegende Ansteuersignal derjenigen Ansteuerparametrierung entspricht, die der zuletzt über die Vorortsensorik vorgenommenen entspricht. Zweckmäßig ist eine solche Ausgestaltung beispielsweise dann, wenn das Verbrauchermodul als elektrischen Verbraucher ein Radiogerät oder ein anderes Audio-Gerät umfasst, um unter Umständen unangenehme Lautstärkensprünge zu vermeiden.

Neben der Nutzung der Datenverbindung zwischen dem Steuermodul und dem Verbrauchermodul kann die Datenleitung auch genutzt werden, um verbrauchermodulspezifische Daten, beispielsweise Kenndaten an das Steuermodul oder auch von Daten eines Sensors als Vorortsensorik zu übermitteln.

Dieses Verfahren und das beschriebene elektrische Verbrauchersystem können auch eingesetzt werden, wenn ein elektrisches Verbrauchermodul nicht in eine Verbrauchermodulkette eingeschaltet und von einem Steuermodul mit Ansteuerdaten angesteuert wird, sondern alleinig angesteuert wird. Dann kann es sich bei dem Steuermodul beispielsweise auch lediglich um einen Dimmer handeln.

Bei dem erfindungsgemäßen Verfahren ist vorgesehen, dass zwischen dem beispielsweise als Dimmer ausgelegten Steuermodul und dem elektrischen Verbrauchermodul eine mechanische Schnittstelle angeordnet ist, damit ein elektrisches Verbrauchermodul durch ein anderes ausgetauscht werden kann. Bei einer solchen Ausgestaltung ist die Schnittstelle Teil eines Wandlers, der die Ansteuerdaten des Steuermoduls, also beispielsweise eines Dimmers, in einen normierten digitalen Stellwert umsetzt. Dieser wird von der Ansteuereinheit des Verbrauchermoduls empfangen und entsprechend wird der zumindest eine elektrische Verbraucher dieses Verbrauchermoduls angesteuert. Ein solches elektrisches Versorgungssystem wird dadurch betrieben, dass
- das Verbrauchermodul mit seinem zumindest einen elektrischen Verbraucher über die Schnittstelle des Wandlers mit Konstantspannung versorgt wird und Ansteuerdaten erhält,
- der Wandler eingangsseitig mit einem Ansteuersignal beaufschlagt wird,
- ein von dem Wandler empfangenes Ansteuersignal in einen unabhängig von der Art des zumindest einen elektrischen Verbrauchers des Verbrauchermoduls normierten digitalen Stellwert umgesetzt wird, welcher Stellwert an einem Kontakt der Schnittstelle zum Abgreifen durch das Verbrauchermodul bereitgestellt wird, und
- der zumindest eine elektrische Verbraucher des Verbrauchermoduls von der Ansteuereinheit mit dem am Kontakt anliegenden Stellwert entsprechend angesteuert wird.

Bei diesem Verfahren wird das elektrische Verbrauchsmodul mit seinem zumindest einen elektrischen Verbraucher durch einen Wandler mit Konstantspannung versorgt. Der Wandler verfügt über eine Schnittstelle, an die das Verbrauchermodul angeschlossen ist bzw. anschließbar ist. Diese Schnittstelle ist vorzugsweise ausgelegt, damit daran ein Verbrauchermodul lösbar angeschlossen werden kann bzw. ist und somit auf einfache Weise ein erstes Verbrauchermodul durch ein zweites Verbrauchermodul ausgetauscht werden kann. Das Verbrauchermodul ist durch den Wandler nicht nur Konstantspannungversorgt, sondern erhält von diesem über die genannte Schnittstelle ebenfalls Ansteuerdaten, entsprechend denen der zumindest eine elektrische Verbraucher anzusteuern ist. Der Wandler verfügt über einen Ansteuereingang, an dem ein Ansteuersignal, beispielsweise das Ausgangssignal eines Dimmers anliegt. Das Ansteuersignal ist typischerweise skalierbar. Dieses ist bei dem Ausgangssignal eines Dimmers beispielsweise der Fall. Das Ausgangssignal des beispielsweise als Dimmer ausgelegten Sensors kann den Wandler unmittelbar beaufschlagen, und zwar an seinem Ansteuereingang. Möglich ist es auch, dass der Ansteuereingang des Wandlers an einen Datenbus, typischerweise einen solchen eines gebäudetechnischen Installationssystems, beispielsweise gemäß dem KNX-Standard angeschlossen ist. Der Wandler erhält dann sein Ansteuersignal über das Gebäudeinstallationssystem, wobei das ursprüngliche Ansteuersignal durchaus wiederum durch einen Dimmer bereitgestellt sein kann.

Der Wandler setzt dieses an seinem Ansteuereingang anliegende Ansteuersignal in einen normierten digitalen Stellwert um, wobei dieses Umsetzen unabhängig von der Art des zum Ansteuern vorgesehenen elektrischen Verbrauchers des Verbrauchermoduls erfolgt. Aus diesem Grunde wird dieser Stellwert als "normiert" angesprochen. Bei diesem normierten digitalen Stellwert handelt es sich um einen Stellwert, der dem eingangsseitig anliegenden Ansteuersignal entsprechend seiner Skalierung, falls das Ansteuersignal skalierbar ist, entspricht. Liegt beispielsweise der Ausgang eines Phasenan- oder Phasenabschnittsdimmers am Ansteuereingang des Wandlers an, wird durch den Wandler das Dimmsignal und damit die gewünschte Dimmstufe von der Stromversorgung des Verbrauchermoduls entkoppelt und als Stellwert über den Datenkontakt der Schnittstelle in das Verbrauchermodul eingespeist. Der Stellwert entspricht der nutzerseitig vorgesehenen Dimmstellung. Die eigentliche Ansteuerung des zumindest einen elektrischen Verbrauchers des Verbrauchermoduls erfolgt durch die Ansteuereinheit des Verbrauchermoduls, die den zumindest einen elektrischen Verbraucher entsprechend dem am Datenkontakt anliegenden Stellwert ansteuert. Damit erfolgt die eigentliche Ansteuerung des zumindest einen elektrischen Verbrauchers des Verbrauchermoduls mit einer durch die Ansteuereinheit des Verbrauchermoduls bereitgestellten Ansteuerparametrierung. Diese ist abgestimmt auf den zumindest einen elektrischen Verbraucher. Beides ist Teil des Verbrauchermoduls. Somit erfolgt eine mögliche Individualisierung eines skalierbaren Ansteuersignals in eine verbraucher- bzw. lastbezogene Ansteuerparametrierung erst im Verbrauchermodul. Hieraus wird deutlich, dass sämtliche vorgeschalteten Bauteile Verbrauchermodul unabhängig ausgelegt sein können. Aufgrund dieses Konzeptes können an der Schnittstelle des Wandlers Verbrauchermodule mit unterschiedlichsten elektrischen Verbrauchern angeschlossen werden, da die interne Ansteuerung durch die Ansteuereinheit des Verbrauchermoduls erfolgt und die Ansteuereinheit des Verbrauchermoduls wiederum durch einen normierten Stellwert angesteuert wird. Somit können an einen solchen Wandler nicht nur Verbrauchermodule mit unterschiedlichen Lichtquellen als elektrische Verbraucher angeschlossen und bestimmungsgemäß betrieben werden. Vielmehr ist es auch möglich, an den Wandler elektrische Verbrauchermodule mit anderen elektrischen Verbrauchern anschließen zu können, die, liegt der Ansteuereingang des Wandlers an dem Ausgang eines ein skalierbares Signal bereitstellenden Sensors, etwa eines Dimmers an, mit diesem bedient werden können. Beispielsweise kann es sich bei dem zumindest einen elektrischen Verbraucher eines solchen Verbrauchermoduls auch um ein Radiogerät, einen Funkaufsatz oder dergleichen handeln. Im Falle eines Radiogerätes als elektrischer Verbraucher des Verbrauchermoduls lässt sich durch den Dimmer auf diese Weise die Lautstärke und/oder die Senderwahl in dem Verbrauchermodul einstellen.

Zur optimierten Ansteuerung des oder der elektrischen Verbraucher des Verbrauchermoduls erfolgt eine Ansteuerung derselben über die in dem Verbrauchermodul integrierte Ansteuereinheit anhand einer verbraucher- bzw. lastspezifischen Kennlinie oder auch eines Kennfeldes (auch mehrdimensional). Eine solche Kennlinie oder ein solches Kennfeld sind in dem Verbrauchermodul in einem Speicher abgelegt und durch die Ansteuereinheit abrufbar. Die Ansteuerung des oder der elektrischen Verbraucher in dem Verbrauchermodul erfolgt dann mit dem sich aus der Kennlinie oder dem Kennfeld ergebenden, dem empfangenen Stellwert entsprechenden Ansteuerparameter. Auf diese Weise kann die nutzerseitige Wahrnehmung bei einer Änderung der Ansteuerparametrierung an das Änderungsverhalten des oder der elektrischen Verbraucher angepasst werden. Im Unterschied zum Stand der Technik, bei dem eine diesbezügliche Ansteuerparametrierung im Sensor, also beispielsweise im Dimmer vorgenommen wird, erfolgt dieses bei dem im Rahmen dieser Ausführung beschriebenen Ansteuerkonzept erst in dem Verbrauchermodul. Die Schnittstelle des Wandlers kann aus diesem Grunde auch von anderen Verbrauchermodulen genutzt werden, und sogar solchen, deren elektrische Verbraucher nicht angesteuert werden, wie dieses beispielsweise bei einem als Ladestation, etwa für ein Mobiltelefon ausgelegtes Verbrauchermodul der Fall ist.

Die Schnittstelle des Wandlers kann aufgrund seiner individualisierten Datenschnittstelle auch genutzt werden, um an diese ein Verbrauchermodul anzuschließen, welches als elektrischen Verbraucher einen Sensor, beispielsweise einen Bewegungssensor, ein Helligkeitssensor oder dergleichen enthält. Bei einer solchen Ausgestaltung wird die Datenleitung für eine Kommunikation von dem Verbrauchermodul über den Wandler zu einer Steuereinheit genutzt, die an den Ansteuereingang des Wandlers angeschlossen ist oder über diesen erreicht werden kann, beispielsweise mittels eines Bus-Systems oder eines Netzwerkes. Angeschlossen werden können an die Schnittstelle eines solchen Wandlers auch Verbrauchermodule, die zwar ein und denselben elektrischen Verbraucher, beispielsweise ein und dieselbe Leuchte, jedoch in unterschiedlichen Ausbaustufen enthalten. So kann gemäß einer Ausgestaltung ein solches Verbrauchermodul eine nicht dimmbare Leuchte umfassen. Unabhängig von dem von der Ansteuereinheit des Verbrauchermoduls empfangenen Stellwert wird diese mit der zum Betrieb der zumindest einen Lichtquelle der Leuchte vorgesehenen Leistung angesteuert, solange das Verbrauchermodul mit Konstantspannung versorgt ist und der von der Ansteuereinheit empfangene Stellwert einen vordefinierten Wert überschreitet. In einer zweiten Ausbaustufe ist die Leuchte dimmbar und wird dann mit einer dem von der Ansteuereinheit des Verbrauchermoduls empfangenen Stellwert entsprechenden Ansteuerparametrierung angesteuert.

Vorzugsweise wird der normierte digitale Stellwert durch den Wandler isochron mit einer vorgegebenen Wiederholungsfrequenz bereitgestellt. Damit ist nach dem Anschließen eines Verbrauchermoduls zu dem Wandler dieses sofort betriebsbereit. Überdies erübrigen sich so etwaige aufwendige Einrichtungsmaßnahmen.

Gemäß einer Ausführung ist die Schnittstelle des Wandlers als Anschlussdose mit konzentrisch zueinander angeordneten, ringförmigen Kontakten als Kontaktbahnen ausgeführt. Das Verbrauchermodul verfügt als Komplementär über ein Steckermodul mit Kontaktstiften als Anschlusskontakte. Zusätzlich sind die Anschlussdose und das Steckermodul mit Haltemitteln zum Halten des in die Anschlussdose eingesetzten Steckermoduls ausgerüstet.

Die Kontakte sind vorzugsweise in der vorbeschriebenen Form angeordnet, damit das in die Anschlussdose eingesetzte Steckermodul darin gegenüber der Anschlussdose gedreht werden kann. Auf diese Weise kann beispielsweise eine Leuchte als Verbrauchermodul in unterschiedliche Stellungen geschwenkt werden.

Um dieses zu ermöglichen, sind Haltemittel eingesetzt, die eine Drehbewegung des Verbrauchermoduls gegenüber der Schnittstelle des Wandlers erlauben. Beispielsweise lassen sich hierfür magnetische Haltemittel einsetzen. In einem solchen Fall verfügt die Anschlussdose und/oder das Verbrauchermodul über einen Haltemagneten. Hierbei kann es sich um einen Permanentmagneten handeln. Das jeweilig andere Modul, also: das Steckermodul oder das Anschlussmodul, verfügt über ein Haltemagnetgegenstück. Hierbei kann es sich um einen zweiten Magneten handeln, der gleichsinnig wie der Haltemagnet angeordnet ist. Ist eine formschlüssige Verriegelung zwischen dem Steckermodul eines Verbrauchermoduls und der Anschlussdose vorgesehen, verfügt gemäß einer Ausgestaltung die Anschlussdose über zumindest eine in radialer Richtung in die Steckeraufnahme der Anschlussdose eingreifendes Riegelelement und das Steckermodul des Verbrauchermoduls über eine umlaufende Nut, in die das Riegelelement eingreift. Das Riegelelement ist vorzugsweise federbelastet in seiner Verriegelungsstellung gehalten. Auch bei einer solchen formschlüssigen Verbindung ist das Steckermodul in der Anschlussdose drehbar. Beide vorbeschriebenen Haltemittel können miteinander kombiniert sein.

Zum Überführen des zumindest einen Riegelelementes aus seiner Verriegelungsstellung in seine Entriegelungsstellung ist gemäß einer Ausgestaltung vorgesehen, dieses durch einen Lösemagneten berührungslos bzgl. des Riegelelementes zu bewirken. Das Riegelelement trägt einen Stellmagneten. Der Lösemagnet ist manuell handhabbar und wird von einem Benutzer an eine vorgegebene Position an der Anschlussdose geführt. In dieser zieht der Lösemagnet sodann den Stellmagneten an, wodurch das zumindest eine Riegelelement aus seiner verriegelnden Position herausbewegt wird. Dann kann das Steckermodul aus der Anschlussdose herausgenommen werden. Vorteilhaft bei diesem Lösekonzept ist, dass die Anschlussdose selbst keine nach außen geführten Organe aufweist und dadurch das Design des Gehäuses eines solchen Wandlers unbeeinflusst ist.

Nachstehend ist die Erfindung anhand von Ausführungsbeispielen unter Bezugnahme auf die beigefügten Figuren beschrieben. Es zeigen:
- **Fig. 1:**: eine perspektivische Darstellung nach Art einer Explosionsdarstellung eines elektrischen Verbrauchersystems gemäß einer ersten Ausgestaltung mit einem eine Schnittstelle aufweisenden Wandler und mit einem daran anschließbaren Verbrauchermodul,
- **Fig. 2:**: einen Schnitt durch die Schnittstelle des Wandlers der Figur 1,
- **Fig. 3:**: ein Blockschaltbild zum Darstellen der Funktionsweise des elektrischen Verbrauchersystems der Figur 1,
- **Fig. 4:**: der Aufbau eines als Frame ausgelegten Datenpaketes unter Vergrößerung eines darin enthaltenen Daten-Slots bei der Kommunikation zwischen dem Wandler und dem Verbrauchermodul und
- **Fig. 5:**: eine Darstellung nach Art eines Blockschaltbildes eines elektrischen Verbrauchersystems gemäß eines nicht beanspruchten Beispiels.

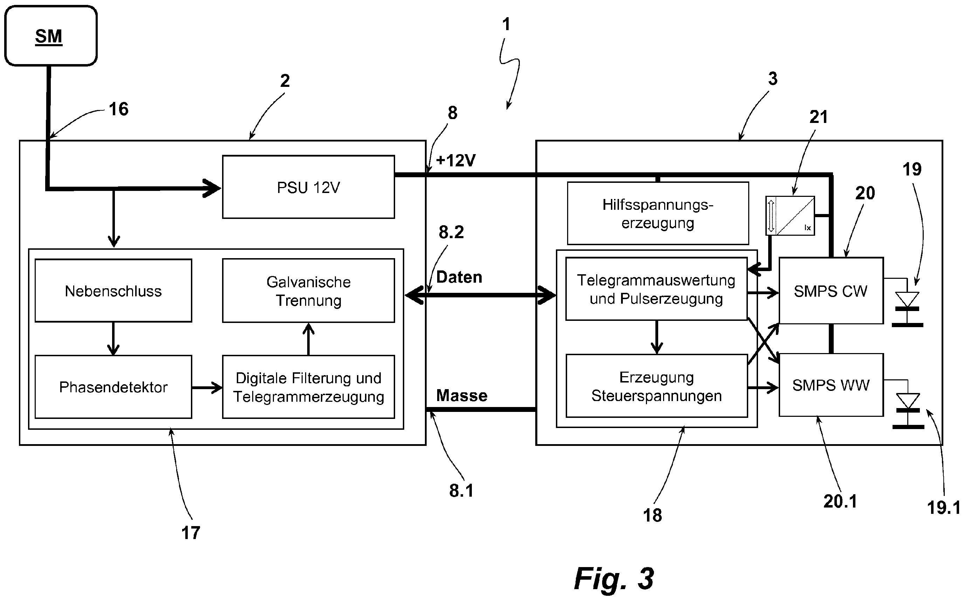

Ein elektrisches Verbrauchersystem 1 umfasst einen Wandler 2 und ein elektrisches Verbrauchermodul 3. In aller Regel werden gebäudeseitig eine Vielzahl derartiger Wandler 2 verbaut sein, an die bedarfsweise das eine oder andere elektrische Verbrauchermodul 3 angeschlossen werden kann. Bei dem elektrischen Verbrauchermodul 3 des beschriebenen Ausführungsbeispiels handelt es sich um eine schematisiert dargestellte Leuchte, die bei dem dargestellten Ausführungsbeispiel nach unten abstrahlend ausgeführt ist. Der Wandler 2 ist wandseitig in eine Unterputzdose 4 eingebaut. Der Wandler 2 ist eingangsseitig in nicht näher dargestellter Art und Weise an den Ausgang eines Steuermoduls SM (siehe Figur 3) angeschlossen. Bei dem beschriebenen Ausführungsbeispiel handelt es sich bei dem Steuermodul SM um einen Phasenabschnittsdimmer. Der Phasenabschnittsdimmer als Steuermodul SM ist in einem Gebäuderaum im Bereich einer Eingangstüre fest installiert. Der Wandler 2 ist an einer vorgesehenen Stelle im Raum wandseitig installiert. Typischerweise sind in dem Raum oder in dem Gebäude mehrere derartige Wandler 2 installiert, und zwar an denjenigen Stellen, an denen elektrische Verbrauchermodule 3 lösbar daran angeschlossen werden sollen. Auch wenn es sich bei dem dargestellten Ausführungsbeispiel bei dem elektrischen Verbraucher 3 um eine Leuchte handelt, können auch andere elektrische Verbraucher an einen solchen Wandler 2 angeschlossen werden.

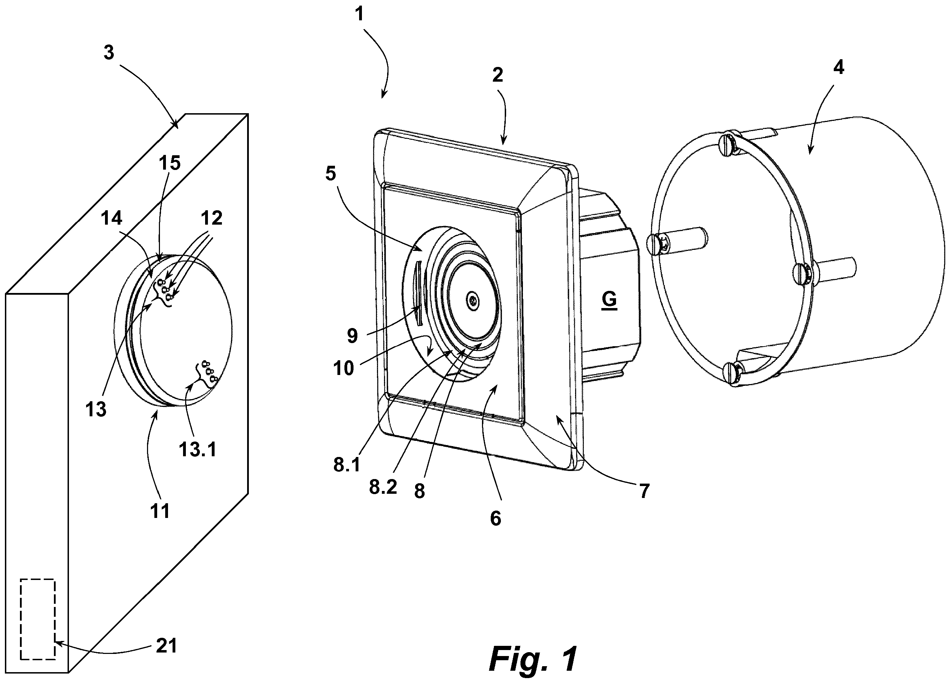

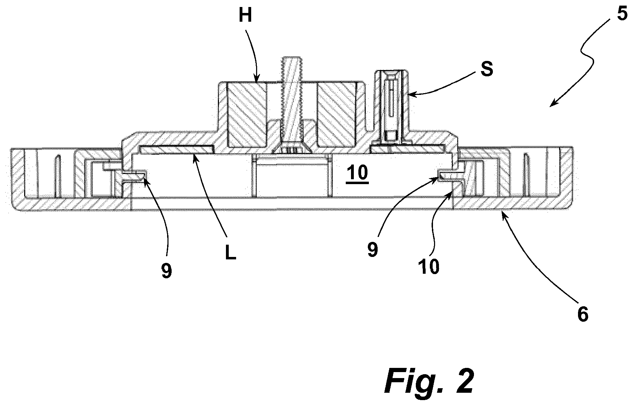

Der Wandler 2 verfügt über eine kombinierte mechanisch-elektrische Schnittstelle 5. Diese ist bei dem dargestellten Ausführungsbeispiel als Anschlussdose ausgeführt. Die Schnittstelle 5 bildet eine topfförmige Vertiefung in einem Zentralstück 6, das seinerseits von einem Rahmen 7 umgeben ist. In dem Boden der Schnittstelle 5 sind drei ringförmig ausgelegte und konzentrisch zueinander angeordnete, als Kontaktbahnen ausgeführte Kontakte 8, 8.1, 8.2 angeordnet. Der innenliegende Kontakt 8 und der außenliegende Kontakt 8.1 dienen der Spannungsversorgung. Der zwischen den Kontakten 8, 8.1 liegende Kontakt 8.2 stellt einen Datenkontakt dar. Zwei einander diametral bezüglich der Aufnahme gegenüber liegende Riegelelemente 9 durchgreifen eine zylindrische, die topfförmige Aufnahme einfassende Wand 10 (siehe auch Figur 2). Die in die Aufnahme eingreifende Kante eines solchen Riegelelementes 9 schneidet die zylindrische Wand 10 nach Art einer Sekante. Die Riegelelemente 9 sind in radialer Richtung bewegbar und in der in den Figuren 1 und 2 gezeigten Verriegelungsstellung durch ein Federelement gehalten. Gegen die Kraft des ein Riegelelement 9 in dieser Stellung haltenden Federelementes ist dieses in seine Einsetz- bzw. Lösestellung verstellbar. Hierzu sind die beiden Riegelelemente 9 kinematisch gekoppelt. Wenn die Riegelelemente 9 aus ihrer Verriegelungsstellung zum Auswechseln eines ersten Verbrauchermoduls 3 verstellt werden sollen, wird hierzu ein Lösemagnet verwendet. Dieser ist an einer vordefinierten Position an der Außenseite des Rahmens 7 für diese Zwecke zu positionieren. Zu diesem Zweck trägt die Verstellmechanik der Riegelelemente 9 einen Gegenmagneten. Nur wenn seitens eines Benutzers ein Lösemagnet an die vorgesehene Lösestelle gehalten wird, wirkt der Lösemagnet mit dem Stellmagneten zusammen, um die Riegelelemente 9 in ihre Entriegelungsstellung zu bringen. Unterhalb des Bodens der topfförmigen Aufnahme befindet sich ein Haltemagnet H, durch den das Verbrauchermodul 3, wenn an den Wandler 2 montiert, gehalten ist.

Der Aufbau der Schnittstelle 5 wird auch aus der Schnittdarstellung der Figur 2 deutlich. Die Schnittstelle 5 ist an ein Einbaugerät mittels eines Steckverbinders S angeschlossen. Das Einbaugerät, in dem die notwendigen Komponenten zum Betreiben der Schnittstelle 5 enthalten sind, ist in Figur 1 als Teil des Wandlers 2 mit dem Bezugszeichen G kenntlich gemacht. In der Schnittdarstellung der Figur 2 ist auch die Leiterplatte L gezeigt, auf der die Kontakte 8, 8.1, 8.2 angeordnet sind.

Das Verbrauchermodul 3 umfasst ein Steckermodul 11, welches in die topfförmige Aufnahme der Schnittstelle 5 des Wandlers 2 einpasst. An den den Kontakten 8, 8.1, 8.2 komplementären Positionen verfügt das Steckermodul 11 über federbelastete Kontaktstifte 12, die, wenn das Steckermodul 11 in die topfförmige Aufnahme der Schnittstelle 5 eingesetzt ist, jeweils einen Kontakt 8, 8.1 oder 8.2 kontaktieren, und zwar unter einer gewissen Federvorspannung stehend. Bei dem dargestellten Ausführungsbeispiel sind zwei Kontaktstiftanordnungen 13, 13.1 vorgesehen, die einander bezüglich des Zentrums des Steckermoduls 11 diametral gegenüberliegend angeordnet sind. Die vordere außenseitige Kante des Steckermoduls 11 trägt eine Fase 14, durch die beim Einsetzen des Steckermoduls 11 in die Aufnahme der Schnittstelle 5 die Riegelelemente 9 verstellt werden. In die zylindrische Mantelfläche des Steckermoduls 11 ist eine umlaufende Nut 15 eingebracht, in die die Riegelelemente 9 einspringen, wenn das Verbrauchermodul 3 mit seinem Steckermodul 11 weit genug in die Aufnahme des Wandlers 2 eingesetzt ist. In dem Steckermodul 11 befindet sich ein Gegenmagnet (in der Figur nicht gezeigt) zu dem in dem Wandler 2 verbauten Haltemagnet H. Beide Magnete sind als Permanentmagnete ausgelegt und dienen nicht nur dem Zusammenhalten von Verbrauchermodul 3 und Wandler 2, sondern auch um den erforderlichen Kontaktdruck zwischen den Kontaktstiften 12 und dem jeweiligen Kontakt 8, 8.1 bzw. 8.2 bereitzustellen.

Das Verbrauchermodul 3 ist durch den Wandler 2 mit Konstantspannung versorgt. Über den als Datenkontakt dienenden Kontakt 8.2 erhält das Verbrauchermodul 3 Daten bezüglich der gewünschten Ansteuerung der im Verbrauchermodul 3 befindlichen Lichtquellen als elektrische Verbraucher. Als Lichtquellen sind in dem Verbrauchermodul 3 eine Anzahl von LEDs verbaut.

Der Aufbau und die Funktionsweise des elektrischen Verbrauchersystems 1 wird nachstehend unter Bezugnahme auf das Blockschaltbild der Figur 3 erläutert. Der Wandler 2 ist mit seinem Ansteuereingang 16, wie vorstehend bereits angemerkt, an ein Steuermodul SM angeschlossen, das bei dem dargestellten Ausführungsbeispiel ein Dimmer ist. An dem Ansteuereingang 16 liegt somit ein von dem Dimmer bereitgestelltes, phasenabschnittsgedimmtes Signal an. Bereitgestellt wird durch den Wandler 2 eine konstante Spannung von 12 V an den für die Spannungsversorgung des Verbrauchermoduls 3 vorgesehenen Kontakten 8, 8.1. Dabei liegt die Phase an dem Kontakt 8 an, während der Kontakt 8.1 als Massekontakt dient. Der Wandler 2 verfügt über einen Stellwertgeber 17, durch den das über den Ansteuereingang 16 empfangene Dimmsignal in einen normierten digitalen Stellwert gewandelt wird, welcher Stellwert galvanisch getrennt an dem Kontakt 8.2 bereitgestellt wird. Der Stellwertgeber 17 befindet sich in dem Einbaugerät G. Die Bereitstellung des normierten Stellwertes erfolgt unabhängig davon, welcher Art der zumindest eine elektrische Verbraucher eines an den Wandler 2 anzuschließenden Verbrauchermoduls 3 ist.

Neben seinem bereits vorstehend erläuterten Steckermodul 11 verfügt das elektrische Verbrauchermodul 3 über eine Ansteuereinheit 18. Die Ansteuereinheit 18 wertet die über den an dem Kontakt 8.2 anliegenden Kontaktstift 12 empfangenen Stellwerte aus und steuert dementsprechend die in dem Verbrauchermodul 3 befindlichen LEDs an. Bei dem dargestellten Ausführungsbeispiel sind zwei Gruppen von LEDs 19, 19.1 in dem Verbrauchermodul 3 verbaut, und zwar solche, die kaltweißes Licht emittieren und solche, die warmweißes Licht emittieren. Die LEDs 19 emittieren kaltweißes Licht. Die LEDs 19.1 emittieren warmweißes Licht. Jeder dieser beiden LED-Gruppen 19, 19.1 ist ein eigenes Schaltnetzteil 20, 20.1 zugeordnet. Die Ansteuerung der Schaltnetzteile 20, 20.1 erfolgt bei diesem Ausführungsbeispiel über eine PWM-Ansteuerung. Dabei ist vorgesehen, dass eine Ansteuerung der Schaltnetzteile 20, 20.1 und damit der LEDs 19, 19.1 unter Verwendung einer Kennlinie erfolgt, um das Dimmverhalten der LEDs 19, 19.1 in Bezug auf die empfangenen Stellwerte zu berücksichtigen. Einfluss in das Kennfeld hat auch die sich ändernde Lichtfarbe bei einem Dimmen der Kaltweiß-LEDs 19 sowie der Warmweiß-LEDs 19.1, und zwar dergestalt, dass trotz Dimmens die vorgesehene Lichtfarbe bei einem Betrieb des Verbrauchermoduls 3 gleich bleibt. Entsprechend werden die Anteile der Kaltweiß-LEDs 19 und der Warmweiß-LEDs 19.1 am Lichtstrom durch die Ansteuereinheit 18 in der Ansteuerparametrierung eingerichtet.

Das elektrische Verbrauchermodul 3 verfügt des Weiteren über einen Helligkeitssensor 21. Der Helligkeitssensor 21 ist bei diesem Ausführungsbeispiel eine Vorortsensorik, da im bzw. am elektrischen Verbrauchermodul 3 angeordnet. Mit den Ausgangsdaten des Helligkeitssensors 21 können die elektrischen Verbraucher 19, 20; 19.1, 20.1 angesteuert werden. Zudem ist das elektrische Verbrauchermodul 3 ausgelegt, damit die Daten des Helligkeitssensors 21 über die Datenverbindung und damit über den Kontakt 8.2 an den Wandler 2 und das eingangsseitig daran angeschlossene Steuermodul SM übertragen werden können. Der Datenfluss zwischen dem Wandler 2 und dem elektrischen Verbrauchermodul 3 ist bei diesem Ausführungsbeispiel somit bidirektional.

Wird der Helligkeitssensor 21 als Vorortsensorik von einem Benutzer betätigt, wird die Auswerteeinheit 18 in einen zweiten Betriebsmodus geschaltet. Verantwortlich hierfür ist der von dem Helligkeitssensor 21 gesendete und von der Auswerteeinheit 18 empfangene Datenstrom. Fortan sind die elektrischen Verbraucher 19, 19.1 des Verbrauchermoduls 3 über den Helligkeitssensor 21 ansteuerbar. Dieser Vorortsensorikansteuermodus wird bei diesem Ausführungsbeispiel beendet, wenn von der Ansteuereinheit 18 in dem von dem Wandler empfangenen Datenstrom ein Umschalt-Bit enthalten ist. Durch dieses wird die Ansteuereinheit 18 in ihren Ansteuermodus geschaltet, bei dem die Ansteuerung der elektrischen Verbraucher in Abhängigkeit von den von dem Wandler empfangenen Stellwerten vorgenommen wird.

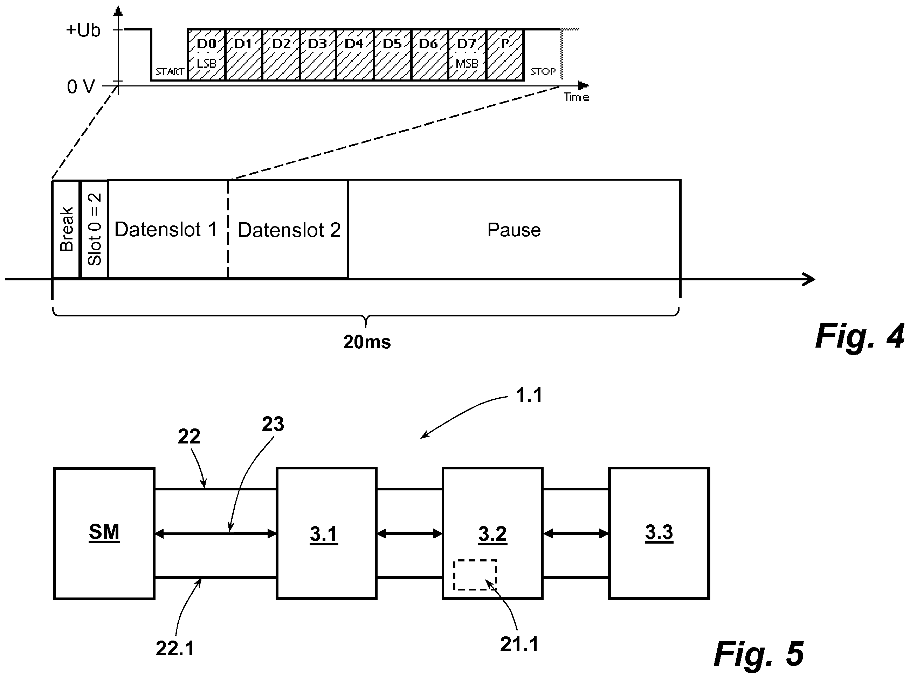

Der an dem Kontakt 8.2 anliegende Stellwert wird isochron durch den Wandler 2 bereitgestellt. Der Stellwert ist in einen Datenslot integriert. Der Aufbau eines solchen Datenslots ist schematisiert in Figur 4 dargestellt und umfasst ein Start-, acht Daten-, ein Parity- und ein Stopp-Bit. Der Pegel der Datenleitung ist im Ruhezustand "high". Die Übertragung beginnt mit dem Startbit. Danach folgen die einzelnen Datenbits. Zum Abschluss werden das Parity- und das Stopp-Bit gesendet. Grundsätzlich ist es ausreichend, wenn als Datenpaket ein solcher Datenslot bereitgestellt wird, und zwar mit einer vorgegebenen Wiederholungsrate (Refresh-Rate). Um weitere Informationen übertragen zu können, beispielsweise um eine mehrkanalige Ansteuerung zu erlauben, umfasst bei dem dargestellten Ausführungsbeispiel ein vollständiges Datenpaket mehrere Datenslots, gefolgt von einer hinreichend langen Pause nach dem letzten Datenslot. Die Übertragung erfolgt in Form von Frames mit zumindest einem Datenslot, wie vorbeschrieben. Ein solcher Datenframe ist bezüglich der von dieser definierten Zeitspanne nicht vollständig mit Datenslots gefüllt. Vielmehr verbleibt ein nennenswerter Anteil des Datenframes ohne Datenslots. Dieses Zeitintervall innerhalb eines Datenframes steht für eine Datenübertragung von dem Verbrauchermodul 3 an den als Steuermodul bei diesem Ausführungsbeispiel dienenden Wandler 2 bzw. eine an diesen angeschlossenen Steuereinheit zur Verfügung. Bei dem dargestellten Ausführungsbeispiel entspricht die in dem Frame enthaltene Pause etwa der Hälfte der zeitlichen Erstreckung des Frames.

Figur 5 zeigt nach Art eines Blockschaltbildes ein weiteres elektrisches Verbrauchersystem 1.1 gemäß eines nicht beanspruchten Beispiels. Bei dem elektrischen Verbrauchersystem 1.1 sind mehrere elektrische Verbrauchermodule 3.1, 3.2, 3.3 nach Art einer Aktorkette zu einer Verbrauchermodulkette zusammengeschaltet. Angesteuert werden die elektrischen Verbrauchermodule 3.1, 3.2, 3.3 durch ein Steuermodul SM. Die elektrischen Verbrauchermodule 3.1, 3.2, 3.3 sind mit Dreidrahttechnologie an das Steuermodul SM angeschlossen. Zwei Leitungen 22, 22.1 dienen der Stromversorgung. Eine weitere Leitung 23 dient als Datenleitung. Grundsätzlich ist das elektrische Verbrauchersystem 1.1 aufgebaut, wie dieses in EP 1 530 108 B1 beschrieben ist. Betrieben wird das elektrische Verbrauchersystem 1.1 mit Datenframes, die, wie dieses zuvor zu dem elektrischen Verbrauchersystem 1 beschrieben ist, ein leeres Zeitintervall für eine Datenrückübertragung enthalten (siehe Figur 4). Bei dem Ausführungsbeispiel der Figur 5 ist das elektrische Verbrauchermodul 3.2 ebenfalls als Leuchte konzipiert und verfügt über einen Helligkeitssensor 21.1. Die Funktionsweise des Helligkeitssensors 21.1 bzw. der dadurch realisierten Vorortsensorik erfolgt gleichermaßen, wie dieses zu dem elektrischen Verbrauchersystem 1 bereits beschrieben ist. Die diesbezüglichen Ausführungen gelten somit gleichermaßen für das Verbrauchermodul 3.2 und dem Betrieb desselben.

Ohne den Umfang der geltenden Ansprüche zu verlassen, ergeben sich für einen Fachmann daher zahlreiche weitere Möglichkeiten, den Gegenstand der Erfindung umzusetzen, ohne dass dieses im Rahmen dieser Ausführungen näher erläutert werden müssten.

### Bezugszeichenliste

- 1, 1.1: Elektrisches Verbrauchersystem
- 2, 2.1: Wandler
- 3, 3.1, 3.2, 3.3: Verbrauchermodul
- 4: Unterputzdose
- 5: Schnittstelle
- 6: Zentralstück
- 7: Rahmen
- 8, 8.1, 8.2: Kontakt
- 9: Riegelelement
- 10: Wand
- 11: Steckermodul
- 12: Kontaktstift
- 13, 13.1: Kontaktstiftanordnung
- 14: Fase
- 15: Nut
- 16: Ansteuereingang
- 17: Stellwertgeber
- 18: Ansteuereinheit
- 19: LED kaltweiß
- 19.1: LED warmweiß
- 20, 20.1: Schaltnetzteil
- 21, 21.1: Helligkeitssensor
- 22, 22.1: Leitung
- 23: Leitung
- G: Einbaugerät
- H: Haltemagnet
- L: Leiterplatte
- S: Steckverbinder
- SM: Steuermodul

## Patentansprüche

1. Verfahren zum Betreiben eines wenigstens einen elektrischen Verbraucher (19, 20; 19.1, 20.1) und eine Ansteuereinheit (18) zum Ansteuern des wenigstens einen elektrischen Verbrauchers (19, 20; 19.1, 20.1) aufweisenden Verbrauchermoduls (3) durch ein Steuermodul (SM) über zwei Versorgungsleitungen und eine Datenleitung, wobei das Verbrauchermodul (3) durch eine Vorortsensorik, mit der der zumindest eine elektrische Verbraucher (19, 20; 19.1, 20.1) des Verbrauchermoduls (3) angesteuert werden kann, wenn aktiviert von einer Ansteuerung seines zumindest einen elektrischen Verbrauchers (19, 20; 19.1, 20.1) durch das Steuermodul (SM) entkoppelt wird und der zumindest eine elektrische Verbraucher (19, 20; 19.1, 20.1) anschließend über die Ansteuereinheit (18) des elektrischen Verbrauchermoduls (3) durch die Vorortsensorik angesteuert wird, wobei sich die Vorortsensorik am Verbrauchermodul (3) befindet und die Entkopplung der Ansteuerung durch die Vorortsensorik des zumindest einen elektrischen Verbrauchers des Verbrauchermoduls (3) von dem oder über das Steuermodul (SM) beendet wird, wenn eine eine vorgegebene Größe überschreitende Stellwertänderung an einem Steuermoduldateneingang der Ansteuereinheit (18) erfasst wird, **dadurch gekennzeichnet, dass**
- das Verbrauchermodul (3) mit seinem zumindest einen elektrischen Verbraucher (19, 20; 19.1, 20.1) über die Schnittstelle (5) eines Wandlers (2) mit Konstantspannung versorgt wird und Ansteuerdaten erhält,
- der Wandler (2) eingangsseitig mit einem Ansteuersignal beaufschlagt wird,
- ein von dem Wandler (2) empfangenes Ansteuersignal in einen unabhängig von der Art des zumindest einen elektrischen Verbrauchers des Verbrauchermoduls (3) normierten digitalen Stellwert umgesetzt wird, welcher Stellwert an einem Kontakt (8.2) der Schnittstelle (5) zum Abgreifen durch das Verbrauchermodul (3) bereitgestellt wird, und
- der zumindest eine elektrische Verbraucher (19, 20; 19.1, 20.1) des Verbrauchermoduls (3) von der Ansteuereinheit (18) mit dem am Kontakt (8.2) anliegenden Stellwert entsprechend angesteuert wird.

2. Verfahren nach Anspruch 1, **dadurch gekennzeichnet, dass** der zumindest eine elektrische Verbraucher (19, 20; 19.1, 20.1) nach Beenden der Entkopplung seiner Ansteuerung über das Steuermodul (SM) durch die Vorortsensorik noch so lange mit der zuletzt verwendeten Ansteuerparametrierung angesteuert wird, bis die durch das Steuermodul (SM) bereitgestellten Ansteuerparameter diese Parametrierung über- oder unterschreitet.

3. Verfahren nach Anspruch 1 oder 2, **dadurch gekennzeichnet, dass** eine bidirektionale Datenkommunikation zwischen dem Steuermodul (SM) und dem elektrischen Verbrauchermodul (3) über die Datenverbindung an dem Kontakt (8.2) erfolgt.

4. Verfahren nach Anspruch 3, **dadurch gekennzeichnet, dass** das elektrische Verbrauchermodul (3) Kenndaten an das Steuermodul (SM) übermittel.

5. Verfahren nach Anspruch 3 oder 4, **dadurch gekennzeichnet, dass** das Verbrauchermodul (3) einen Sensor als Vorortsensorik umfasst und die Sensordaten an das Steuermodul (SM) übermittelt werden.

6. Verfahren nach einem der Ansprüche 1 bis 5, **dadurch gekennzeichnet, dass** der Frame eines an das elektrische Verbrauchermodul (3) übertragenen Datenpaketes nur zum Teil mit Datenslots belegt ist und die nicht belegten Datenslots dasjenige Zeitintervall definieren, in dem Daten von dem zumindest einen elektrischen Verbrauchermodul (3) an das Steuermodul (SM) übertragen werden können.

7. Verfahren nach einem der Ansprüche 1 bis 6, **dadurch gekennzeichnet, dass** der Stellwert durch den Wandler (2) in einer vorgegebenen Wiederholungsfrequenz bereitgestellt wird.

8. Verfahren nach Anspruch 7, **dadurch gekennzeichnet, dass** der von der Ansteuereinheit (18) des Verbrauchermoduls (3) empfangene Stellwert anhand einer Kennlinie oder anhand eines Kennfeldes in Ansteuerparameter umgesetzt und der zumindest eine elektrische Verbraucher (19, 20; 19.1, 20.1) mit diesen Ansteuerparametern angesteuert wird.

9. Elektrisches Verbrauchersystem (1), das dazu eingerichtet ist, das Verfahren nach einem der Ansprüche 1 bis 8 auszuführen, mit einem Steuermodul (SM) zum Bereitstellen einer Spannungsversorgung sowie von Ansteuerdaten für wenigstens ein daran angeschlossenes, zumindest einen elektrischen Verbraucher (19, 20; 19.1, 20.1) sowie eine Ansteuereinheit (18) aufweisendes Verbrauchermodul (3), wobei zumindest eines der elektrischen Verbrauchermodule (3) eine Vorortsensorik zum Ansteuern seines zumindest einen elektrischen Verbrauchers (19, 20; 19.1, 20.1) aufweist, **dadurch gekennzeichnet, dass** zwischen dem Steuermodul (SM) und dem zumindest einen elektrischen Verbrauchermodul (3) ein Wandler (2) mit einem Ansteuereingang (16) zum Empfangen von Ansteuerdaten von dem Steuermodul (SM) zum Ansteuern des zumindest einen elektrischen Verbrauchers (19, 20; 19.1, 20.1) des Verbrauchermoduls (3), mit zwei Kontakten (8, 8.1) zur Spannungsversorgung, mit wenigstens einem Kontakt (8.2) als Datenkontakt sowie mit einem Stellwertgeber (17) zum Umsetzen eines empfangenen Ansteuersignals in einen von der Art des zumindest einen elektrischen Verbrauchers (19, 20; 19.1, 20.1) des Verbrauchermoduls (3) unabhängigen, normierten digitalen Stellwert angeordnet ist und dass das Verbrauchermodul (3) Anschlussmittel zum Kontaktieren der Kontakte (8, 8.1, 8.2) des Wandlers (2) sowie eine eingangsseitig an den Kontakt (8.2) angeschlossene bzw. anschließbare Ansteuereinheit (18) umfasst, durch die der zumindest eine elektrische Verbraucher (19, 20; 19.1, 20.1) entsprechend dem empfangenen Stellwert ansteuerbar ist.

10. Verbrauchersystem nach Anspruch 9, **dadurch gekennzeichnet, dass** die Vorortsensorik als Ein-Aus-Schalter ausgelegt ist.

11. Verbrauchersystem nach Anspruch 10, **dadurch gekennzeichnet, dass** die Vorortsensorik mit einer Dimmfunktionalität ausgerüstet ist.

12. Verbrauchersystem nach einem der Ansprüche 9 bis 11, **dadurch gekennzeichnet, dass** das zumindest eine elektrische Verbrauchermodul (3) als Vorortsensorik über einen Helligkeitssensor (21) verfügt.

13. Verbrauchersystem nach einem der Ansprüche 9 bis 12, **dadurch gekennzeichnet, dass** der Ansteuereinheit (18) zumindest eines der elektrischen Verbrauchermodule (3) eine Sendeeinheit zum Übertragen von Daten von dem elektrischen Verbrauchermodul (3) an das Steuermodul (SM) zugehörig ist

14. Verbrauchersystem nach einem der Ansprüche 9 bis 13, **dadurch gekennzeichnet, dass** der Wandler (2) eine als Anschlussdose mit als konzentrisch zueinander angeordneten, ringförmigen Kontaktbahnen ausgeführten Kontakten (8, 8.1, 8.2) ausgelegte Schnittstelle (5) ist und das Verbrauchermodul (3) ein Steckermodul (11) mit Kontaktstiften (12) als Anschlussmittel ausgelegt sind und dass die Anschlussdose und das Steckermodul (11) des Verbrauchermoduls (3) mit Haltemittel zum Halten des in die Anschlussdose eingesetzten Steckermoduls (11) ausgerüstet sind.

15. Verbrauchersystem nach Anspruch 14, **dadurch gekennzeichnet, dass** es sich bei den Haltemitteln um magnetische Haltemittel handelt und die Anschlussdose und/oder das Steckermodul einen Haltemagneten (H) und das jeweils komplementäre Teil - Steckermodul oder Anschlussdose - ein Haltemagnetgegenstück aufweisen.

16. Verbrauchersystem nach Anspruch 14 oder 15, **dadurch gekennzeichnet, dass** die Schnittstelle (5) zum formschlüssigen Verriegeln des darin eingesetzten Steckermoduls (11) über wenigstens ein in radialer Richtung in die Aufnahme eingreifendes Riegelelement (9) verfügt, das in eine umlaufende Nut (15) des Steckermoduls (11) eingreift.

17. Verbrauchersystem nach Anspruch 16, **dadurch gekennzeichnet, dass** das Riegelelement (9) durch einen an entsprechender Position an der Schnittstelle (5) positionierten Lösemagneten in seine Entriegelungsstellung verstellbar ist.

## Claims

1. Method for operating at least one load module (3) comprising at least one electrical load (19, 20; 19.1, 20.1) and a drive unit (18) for activating the at least one electrical load (19, 20; 19.1, 20.1) by means of a control module (SM) via two supply lines and a data line, wherein the load module (3) is decoupled from a drive of its at least one electrical load (19, 20; 19.1, 20.1) by the control module (SM) by means of a local sensor system, with which the at least one electrical load (19, 20; 19.1, 20.1) of the load module (3), if activated, can be driven, and the at least one electrical load (19, 20; 19.1, 20.1) is subsequently actuated via the drive unit (18) of the electrical load module (3) by the local sensor system, wherein the local sensor system is located on the load module (3) and the decoupling of the drive by the local sensor system of the at least one electrical load of the load module (3) is terminated by or via the control module (SM) if a change of the setpoint value exceeding a predetermined parameter is detected at a control module data input of the drive unit (18), **characterized by the fact** that
- the load module (3) with its at least one electrical load (19, 20; 19.1, 20.1) is supplied with constant voltage via the interface (5) of a converter (2) and receives control data,
- a drive signal is applied to the input of the converter (2),
- a control signal received by the converter (2) is converted into a digital setpoint value which is standardized independently of the type of the at least one electrical load of the load module (3), which setpoint value is provided at a contact (8.2) of the interface (5) for tapping by the load module (3), and
- the at least one electrical load (19, 20; 19.1, 20.1) of the load module (3) is controlled accordingly by the drive unit (18) with the setpoint value applied to the contact (8.2).

2. Method in accordance with Claim 1, **characterized by the fact** that the at least one electrical load (19, 20; 19.1, 20.1), after termination of the decoupling of its drive by the control module (SM) by means of the local sensor system, is still actuated with the last actuation parameterization used until the actuation parameters provided by the control module (SM) exceed or fall below this parameterization.

3. Method in accordance with Claim 1 or 2, **characterized by the fact** that bidirectional data communication takes place between the control module (SM) and the electrical load module (3) via the data connection at the contact (8.2).

4. Method in accordance with Claim 3, **characterized by the fact** that the electrical load module (3) transmits characteristic data to the control module (SM).

5. Method in accordance with Claim 3 or 4, **characterized by the fact** that the load module (3) comprises a sensor as local sensor system and the sensor data are transmitted to the control module (SM).

6. Method in accordance with any of Claims 1 to 5, **characterized by the fact** that the frame of a data packet transmitted to the electrical load module (3) is only partially occupied with data slots, and the unoccupied data slots define the time interval in which data can be transmitted from the at least one electrical load module (3) to the control module (SM).

7. Method in accordance with any of Claims 1 to 6, **characterized by the fact** that the setpoint value is provided by the converter (2) at a predetermined repetition frequency.

8. Method in accordance with Claim 7, **characterized by the fact** that the setpoint value received by the drive unit (18) of the load module (3) is converted into control parameters on the basis of a characteristic curve or on the basis of a characteristic diagram, and the at least one electrical load (19, 20; 19.1, 20.1) is controlled with these control parameters.

9. System of electrical loads (1) which is set up to carry out the method in accordance with Claims 1 to 8, having a control module (SM) for providing a voltage supply and control data for at least one load module (3) which is connected thereto and has at least one electrical load (19, 20; 19.1, 20.1) and a drive unit (18), at least one of the electrical load modules (3) having a local sensor system for controlling its at least one electrical load (19, 20; 19.1, 20.1), **characterized by the fact** that between the control module (SM) and the at least one electrical load module (3) there is a converter (2) having a control input (16) for receiving control data from the control module (SM) for controlling the at least one electrical load (19, 20; 19.1, 20.1) of the load module (3), having two contacts (8, 8.1) for voltage supply, having at least one contact (8.2) as a data contact and having a setpoint value transmitter (17) for converting a received control signal into a digital standardized setpoint value which is independent of the type of the at least one electrical load (19, 20; 19.1, 20.1) of the load module (3), and by the fact that the load module (3) comprises connection means for making contact with the contacts (8, 8.1, 8.2) of the converter (2) and a drive unit (18) which is connected or can be connected to the contact (8.2) on the input side, by means of which the at least one electrical load (19, 20; 19.1, 20.1) can be controlled in accordance with the received setpoint value.

10. System of loads in accordance with Claim 9, **characterized by the fact** that the local sensor system is designed as an on-off switch.

11. System of loads in accordance with Claim 10, **characterized by the fact** that the local sensor system is equipped with a dimming functionality.

12. System of loads in accordance with any of Claims 9 to 11, **characterized by the fact** that the at least one electrical load module (3) has a brightness sensor (21) as local sensor system.

13. System of loads in accordance with any of Claims 9 to 12, **characterized by the fact** that the drive unit (18) of at least one of the electrical load modules (3) is associated with a transmission unit for transmitting data from the electrical load module (3) to the control module (SM).

14. System of loads in accordance with any of Claims 9 to 13, **characterized by the fact** that the converter (2) is an interface (5) designed as a junction box with contacts (8, 8.1, 8.2) designed as annular contact paths arranged concentrically to one another, and the load module (3) is a plug module (11) with contact pins (12) designed as connection means, and by the fact that the junction box and the plug module (11) of the load module (3) are equipped with holding means for holding the plug module (11) inserted into the junction box.

15. System of loads in accordance with Claim 14, **characterized by the fact** that the holding means are magnetic holding means and the junction box and/or the plug module have a holding magnet (H) and the respective complementary part - plug module or junction box - has a holding magnet counterpart.

16. System of loads in accordance with Claim 14 or 15, **characterized by the fact** that the interface (5), for positive locking of the plug module (11) inserted therein, has at least one locking element (9) engaging in the receptacle in radial direction and engaging in a circumferential groove (15) of the plug module (11).

17. System of loads in accordance with Claim 16, **characterized by the fact** that the locking element (9) is adjustable into its unlocking position by means of a release magnet positioned at a corresponding position on the interface (5).

## Revendications

1. Procédé pour faire fonctionner un module consommateur (3) comportant au moins un consommateur électrique (19, 20; 19.1, 20.1) et une unité de commande (18) pour commander l'au moins un consommateur électrique (19, 20; 19.1, 20.1) par un module de commande (SM) par l'intermédiaire de deux lignes d'alimentation et d'une ligne de données, le module consommateur (3) étant découplé d'une commande de son au moins un consommateur électrique (19, 20; 19.1, 20.1) par le module de commande (SM) par un système local de capteurs, au moyen duquel l'au moins un consommateur électrique (19, 20; 19.1, 20.1) du module consommateur (3), lorsqu'il est activé, peut être activé et l'au moins un consommateur électrique (19, 20; 19.1, 20.1) étant ensuite actionné par le système local de capteurs par l'intermédiaire de l'unité de commande (18) du module de consommation électrique (3), le système local de capteurs se trouvant sur le module de consommation (3) et le découpage de la commande par le système local de capteurs du au moins un consommateur électrique du module de consommation (3) étant terminé du ou par le module de commande (SM) lorsqu'une modification de la valeur de réglage dépassant un paramètre prédéterminé est détectée à une entrée de données du module de commande de l'unité de commande (18), **caractérisé en ce que**
- le module consommateur (3) avec son au moins un consommateur électrique (19, 20; 19.1, 20.1) est alimenté en tension constante via l'interface (5) d'un convertisseur (2) et reçoit des données d'actionnement,
- un signal de commande est appliqué à l'entrée du convertisseur (2),
- un signal d'actionnement reçu par le convertisseur (2) est converti en une valeur de réglage numérique qui est normalisée indépendamment du type du au moins un consommateur électrique du module consommateur (3), laquelle valeur de réglage est mise à disposition sur un contact (8.2) de l'interface (5) pour la prise par le module consommateur (3), et
- l'au moins un consommateur électrique (19, 20; 19.1, 20.1) du module consommateur (3) est commandé en conséquence par l'unité de commande (18) avec la valeur de réglage appliquée au contact (8.2).

2. Procédé selon la revendication 1, **caractérisé en ce que** l'au moins un consommateur électrique (19, 20; 19.1, 20.1), après la fin du découplage de sa commande par le module de commande (SM) au moyen du système local de capteurs, est encore actionné avec le dernier paramétrage d'actionnement utilisé jusqu'à ce que les paramètres d'actionnement fournis par le module de commande (SM) dépassent ou tombent en dessous de ce paramétrage.

3. Procédé selon la revendication 1 ou 2, **caractérisé en ce qu'**une communication de données bidirectionelle entre le module de commande (SM) et le module consommateur électrique (3) est effectuée via la connexion de données au niveau du contact (8.2).

4. Procédé selon la revendication 3, **caractérisé en ce que** le module consommateur électrique (3) transmet des données caractéristiques au module de commande (SM).

5. Procédé selon la revendication 3 ou 4, **caractérisé en ce que** le module consommateur (3) comprend un capteur en tant que système local de capteurs et les données du capteur sont transmises au module de commande (SM).

6. Procédé selon l'une des revendications 1 à 5, **caractérisé en ce que** la trame d'un paquet de données transmis au module consommateur électrique (3) n'est que partiellement occupée par des créneaux de données, et les créneaux de données inoccupés définissent l'intervalle de temps dans lequel les données peuvent être transmises du au moins un module consommateur électrique (3) au module de commande (SM).

7. Procédé selon l'une des revendications 1 à 6, **caractérisé en ce que** la valeur de réglage est fournie par le convertisseur (2) à une fréquence de répétition prédéterminée.

8. Procédé selon la revendication 7, **caractérisé en ce que** la valeur de réglage reçue par l'unité de commande (18) du module consommateur (3) est convertie en paramètres de commande au moyen d'une courbe caractéristique ou au moyen d'un diagramme caractéristique, et l'au moins un consommateur électrique (19, 20; 19.1, 20.1) est commandé avec ces paramètres de commande.

9. Système de consommateurs électriques (1), qui est conçu pour la mise en oeuvre du procédé selon l'une des revendications 1 à 8, comprenant un module de commande (SM) pour la mise à disposition d'une alimentation en tension et de données de commande pour au moins un module consommateur (3) y relié et comportant au moins un consommateur électrique (19, 20; 19.1, 20.1) et une unité de commande (18), au moins l'un des modules consommateurs électriques (3) comportant un système local de capteurs pour commander son au moins un consommateur électrique (19, 20; 19.1, 20.1), **caractérisé en ce que,** entre le module de commande (SM) et l'au moins un module consommateur électrique (3), un convertisseur (2) est arrangé comportant une entrée de commande (16) pour la réception de données de commande du module de commande (SM) pour l'actionnement du au moins un consommateur électrique (19, 20; 19.1, 20.1) du module consommateur (3), comportant deux contacts (8, 8.1) pour l'alimentation en tension, comportant au moins un contact (8.2) comme contact de données et comportant un transmetteur de valeurs de réglage (17) pour la conversion d'un signal de commande reçu en une valeur de commande numérique normalisée qui est indépendante du type de l'au moins un consommateur électrique (19, 20; 19.1, 20.1) du module consommateur (3), et **en ce que** le module consommateur (3) comprend des moyens de connexion pour la mise en contact avec les contacts (8, 8.1, 8.2) du convertisseur (2) et une unité de commande (18) qui est reliée ou peut être reliée au contact (8.2) du côté de l'entrée et au moyen de laquelle l'au moins un consommateur electrique (19, 20; 19.1, 20.1) peut être commandé en fonction de la valeur de commande reçue.

10. Système de consommateurs selon la revendication 9, **caractérisé en ce que** le système local de capteurs est conçu comme un interrupteur marche-arrêt.

11. Système de consommateurs selon la revendication 10, **caractérisé en ce que** le système local de capteurs est équipé d'une fonction de gradation.

12. Système de consommateurs selon l'une des revendications 9 à 11, **caractérisé en ce que** le au moins un module consommateur électrique (3) possède un capteur de luminosité (21) comme système local de capteurs.

13. Système de consommateurs selon l'une des revendications 9 à 12, **caractérisé en ce que** l'unité de commande (18) d'au moins un des modules consommateurs électriques (3) est associée à une unité de transmission pour transmettre des données du module consommateur électrique (3) au module de commande (SM).

14. Système de consommateurs selon l'une des revendications 9 à 13, **caractérisé en ce que** le convertisseur (2) est une interface (5) conçue comme une boîte de joinction avec des contacts (8, 8.1, 8.2) conçus comme des chemins de contact annulaires disposés concentriquement les uns par rapport aux autres, et **en ce que** le module consommateur (3) est conçu comme un module de fiche (11) avec des broches de contact (12) comme moyen de connexion, et **en ce que** la boîte de jonction et le module de fiche (11) du module consommateur (3) sont équipés de moyens de maintien pour maintenir le module de fiche (11) inséré dans la boîte de jonction.

15. Système de consommateurs selon la revendication 14, **caractérisé en ce que** les moyens de maintien sont des moyens de maintien magnétiques et que la boîte de jonction et/ou le module de fiche comprennent un aimant de maintien (H) et la partie complémentaire respective - module de fiche ou boîte de jonction - comprend une contrepartie d'aimant de maintien.

16. Système de consommateurs selon la revendication 14 ou 15, **caractérisé en ce que** l'interface (5), pour le verouillage par complémentarité de forme du module de fiche (11) qui y est inséré, présente au moins un élément de verrouillage (9) qui s'engage dans le réceptacle en direction radiale et qui s'engage dans une rainure périphérique (15) du module de fiche (11).

17. Système de consommateurs selon la revendication 16, **caractérisé en ce que** l'élément de verrouillage (9) peut être décalé dans sa position de déverrouillage au moyen d'un aimant de libération positionné à un endroit correspondant sur l'interface (5).
